# EUROPÄISCHE PATENTSCHRIFT

(11) **EP 2 399 448 B1**
(45) Veröffentlichungstag und Bekanntmachung des Hinweises auf die Patenterteilung: **14.10.2015**
(21) Anmeldenummer: 11167689.6
(22) Anmeldetag: 26.05.2011
(51) Int. Cl.: A01F 15/07, A01F 15/18

(54) **Einrichtung zur Kontrolle des Zugmittelverlaufs von Fördereinrichtungen**
Device for controlling the traction of conveyor devices
Dispositif de contrôle du déroulement d'agent de traction de dispositifs de transport

(30) Priorität: 24.06.2010 DE 102010030482
(43) Veröffentlichungstag der Anmeldung: 28.12.2011
(73) Patentinhaber: Deere & Company, Moline, IL 61265-8098 (US)
(72) Erfinder: Viaud, Jean, 01190 Reyssouze (FR)
(74) Vertreter: Münch, Christian

(56) Entgegenhaltungen:
- DE-A1- 2 056 468
- DE-A1- 2 556 688
- US-A- 3 981 391

## Beschreibung

Die Erfindung betrifft eine Einrichtung zur Kontrolle des Zugmittelverlaufs von Fördereinrichtungen, insbesondere von Rundballenpressen, mit wenigstens einer Rolle und wenigstens einem Zugmittel, das über die Rolle geführt wird und wenigstens einen ersten Randbereich aufweist, der sich in einer Richtung quer zur Längsrichtung des Zugmittels erstreckt.

Fördereinrichtungen mit Zugmitteln werden insbesondere zum Transport von losem Fördergut, wie beispielsweise Schütt-Stückgut, verwendet. Die Fördereinrichtungen weisen hierzu Zugmittel, insbesondere Flachriemen, Bänder, Kettengewirke oder dergleichen auf, die das Fördergut tragen oder dieses aufgreifen bzw. aufnehmen. Das Zugmittel wird dabei über Rollen geführt oder umgelenkt.

Derartige Fördereinrichtungen werden beispielsweise bei Rundballenpressen verwendet, die Stroh oder Heu als Fördergut aufnehmen, um dieses auf sich selbst in der Form eines Rundballens aufzuwickeln.

Insbesondere bei Rundballenpressen ist eine gleichmäßige Zufuhr des Förderguts erforderlich, da die äußere Form des Rundballens von der Gleichmäßigkeit der Zufuhr des Pressguts abhängig ist.

Bei einer ungleichmäßigen Zufuhr des Förderguts wird das Zugmittel einseitig belastet. Neben der Bewegungskomponente in der Laufrichtung des Zugmittels ergibt sich durch die einseitige Belastung auch eine quer zur Bewegungsrichtung verlaufende Bewegungskomponente, durch die das Zugmittel auf der Rolle in Richtung dessen Drehachse bewegt wird. Dieser Schräglauf des Zugmittels kann zu einem Reißen des Zugmittels oder zu einem Überkreuzen von parallel zueinander verlaufenden, aneinander grenzenden Zugmitteln führen.

Zur Vermeidung eines Schräglaufs des Zugmittels ist es daher aus dem Stand der Technik bekannt, am Seitenrand des Zugmittels Führungsleisten anzuordnen, die sich in einer Richtung parallel zur Laufrichtung des Zugmittels erstrecken und eine quer dazu gerichtete Bewegung des Zugmittels verhindern.

Aufgrund der Reibung zwischen der Seitenkante des Zugmittels und der Führungsleiste unterliegen die Zugmittel einem schnelleren Verschleiß als es ohne Führungsleisten der Fall ist. Weiterhin stellen Führungsleisten auch regelmäßig Sammelpunkte für umlaufendes Fördergut dar, was zu Verstopfungen führen kann.

DE 25 56 688 A1 offenbart eine Erntegutsammelvorrichtung eines Mähdreschers mit Förderbändern, welche neben Umlenkrollen zusätzlich zwei verstellbare Führungsrollen aufweisen, die das Förderband in dessen Randbereich auslenken. Die Führungsrollen sind dabei zwischen den Umlenkrollen angeordnet.

US 3 981 391 A offenbart eine Rundballenpresse mit einem Förderband, bei welchem zwischen einer Spannrolle und einer Antriebsrolle zwei Führungsrollen angeordnet sind. Die Führungsrollen lenken das Förderband derart aus, so dass das Förderband im Bereich der Führungsrollen einen rinnenförmigen Querschnitt aufweist.

DE-A-2056468 beschreibt eine Transportbandanlage mit einem um zylindrische Walzen umlaufenden Transportband, welches durch zylindrische Führungswalzen geführt wird. Die Führungswalzen sind hierbei auf einem ortsfesten Achsstumpf gelagert, der innerhalb eines vorgegebenen Kegelwinkels justiert und verstellt werden kann.

Aufgabe der vorliegenden Erfindung ist es, eine Einrichtung zur Kontrolle des Zugmittelverlaufs von Fördereinrichtungen zu schaffen, welche das Zugmittel mechanisch nur gering beansprucht und Verstopfung von Fördergut verhindert.

Diese Aufgabe wird gemäß den Merkmalen des Patentanspruchs 1 gelöst.

Die Einrichtung zur Kontrolle des Zugmittelverlaufs von Fördereinrichtungen umfasst wenigstens eine Rolle und wenigstens ein Zugmittel, das über die Rolle geführt wird. Hierbei ist es insbesondere bei Rundballenpressen bekannt, dass das Zugmittel über die Rolle von einer ersten in eine zweite Bewegungsebene geführt wird.

Das Zugmittel weist gemäß der Erfindung einen ersten Randbereich auf, der sich von der ersten Seitenkante des Zugmittels in eine Richtung quer zu dessen Längsrichtung erstreckt. Die Längsrichtung des Zugmittels stimmt hierbei im Wesentlichen mit der vorgesehenen Laufrichtung des Zugmittels überein.

Gemäß der Erfindung ist wenigstens eine Führungsrolle vorgesehen, durch die der erste Randbereich aus der jeweiligen Bewegungsebene des Zugmittels auslenkbar ist. Die Führungsrolle wirkt dabei auf die Oberfläche des Zugmittels in dessen Randbereich ein.

Die Auslenkung des Randbereichs bewirkt, dass die Seitenkante des Zugmittels beim Auflaufen des Randbereichs auf die Rolle in deren axialen Richtung versetzt ist. Durch diesen Versatz der Seitenkante wird das Zugmittel beim Auflaufen auf die Rolle in axialer Richtung der Rolle verschoben, wodurch der Verlauf des Zugmittels über die Rolle korrigiert und ein Schräglauf des Zugmittels verhindert wird.

Weiterhin bewirkt die Auslenkung durch die Führungsrolle, dass sich die Zugspannung im Randbereich des Zugmittels erhöht. Zur Verminderung der Zugspannung bewegt sich das Zugmittel daher in axialer Richtung der Rolle, um die Größe der Auslenkung des Randbereichs zu verkleinern.

Neben im Wesentlichen zylindrischen Mantelformen kann die Rolle auch andere Formen, wie beispielsweise eine ballige Form aufweisen. Da riemenartige Zugmittel dazu tendieren über den höchsten Punkt einer Rolle zu laufen, bewirkt ein balliger Abschnitt auf der Rolle eine Zentrierung des Zugmittels auf der Rolle.

Bei dem Zugmittel kann es sich beispielsweise um einen Flach- oder Bandriemen auf Gummibasis handeln, der aus einer oder mehreren Schichten aus Kunstfasern besteht und vorzugsweise auf der Oberfläche strukturiert ist.

Gemäß der Erfindung ist die Führungsrolle freitragend gelagert, wodurch ein Ansammeln von umlaufendem Fördergut verhindert wird und sich ein Selbstreinigungseffekt ergibt.

Nach einer weiteren Ausführungsform der Erfindung ist die Führungsrolle stromauf, d.h. in Bewegungsrichtung des Zugmittels vor der Rolle angeordnet. Durch diese Anordnung ist bereits eine geringe Auslenkung des Randbereichs ausreichend, um den Verlauf des Zugmittels über die Rolle zu korrigieren.

Gemäß der Erfindung kann es vorgesehen sein, dass die Führungsrolle relativ zur Rolle bewegbar ist. Hierdurch ist die Größe der Auslenkung des Randbereichs des Zugmittels veränderbar. Die Größe der Auslenkung des Randbereichs bestimmt dabei den Versatz der Seitenkante beim Auflaufen auf die Rolle in deren axialer Richtung.

Die Verstellung der Führungsrolle relativ zur Rolle kann manuell von einer aktiven in eine inaktive Position erfolgen, wobei in der inaktiven Position der Randbereich des Zugmittels nicht aus der Bewegungsebene des Zugmittels ausgelenkt wird. Weiterhin kann die Verstellung der Führungsrolle auch in Abhängigkeit von dem Verlauf des Zugmittels auf der Rolle erfolgen, wodurch insbesondere bei der Verwendung einer Steuerungsvorrichtung die Möglichkeit besteht, den Zugmittelverlauf während des Betriebs der Fördereinrichtung automatisch zu korrigieren.

Die Mantelform der Führungsrolle ist gemäß der Erfindung im Wesentlichen konisch. Durch eine konische Mantelform, deren Durchmesser sich von der Seitenkante über die Breite des Zugmittels hin verkleinert, verringert sich die Größe der Auslenkung des Zugmittels von der Seitenkante in Richtung deren Breite stetig.

Gemäß der Erfindung kann sich die Drehachse der Führungsrolle in einem Winkel in einem Bereich von 20° bis 45° relativ zu der Bewegungsebene des Zugmittels erstrecken. Hierdurch wird der Randbereich an der Seitenkante am stärksten ausgelenkt, so dass sich die Größe der Auslenkung des Zugmittels in Richtung dessen Breite zur Mitte hin stetig verringert.

Nach einer weiteren Ausführungsform der Erfindung erstreckt sich die Achse der Führungsrolle in einer Ebene parallel zur Bewegungsebene des Zugmittels in einem Winkel in einem Bereich von 5° bis 15° zur Achse der Rolle.

Da mehrdimensionale Verformungen mit kleinen Radien stets auch eine erhöhte Materialbeanspruchung darstellen, wird die Lebensdauer des Zugmittels durch eine stetige Verringerung der Größe der Auslenkung des Zugmittels in Richtung dessen Breite erhöht.

Sowohl durch die konische Mantelform der Führungsrolle als auch durch die Verschwenkung der Drehachse der Führungsrolle gegenüber der Drehachse der Rolle wird erreicht, dass die Seitenkante einen größeren Versatz in axialer Richtung der Rolle aufweist als der verbleibende Randbereich.

Anstelle der Verschwenkung gegenüber der Drehachse der Rolle kann die Achse der Führungsrolle sich gemäß einer weiteren erfindungsgemäßen Ausführungsform in einer Richtung parallel zur Achse der Rolle erstrecken.

Nach einer Ausführungsform der Erfindung erstreckt sich die Führungsrolle über wenigstens ein Drittel der Breite des Zugmittels hinweg. Die Führungsrolle kann sich dabei bis zur Mitte des Zugmittels erstrecken.

Gemäß der Erfindung können die Führungsrolle und die Rolle auf gegenüberliegenden Seiten des Zugmittels angeordnet sein, wodurch die Führungsrolle und die Rolle jeweils gegenüberliegenden Oberflächen des Zugmittels zugeordnet sind. Der Randbereich des Zugmittels läuft hierbei auf die Rolle auf, bevor der restliche Abschnitt des Zugmittels in Kontakt mit der Rolle kommt.

Alternativ kann es hierzu auch vorgesehen sein, dass die Führungsrolle und die Rolle in Bezug zum Zugmittel auf der gleichen Seite angeordnet sind. Hierdurch wird beim Auflaufen des Zugmittels auf die Rolle der Randbereich von dieser angehoben.

Nach einer weiteren Ausführungsform der Erfindung kann es vorgesehen sein, dass das Zugmittel einen zweiten Randbereich aufweist, der sich von der zweiten Seitenkante des Zugmittels quer zu dessen Längsrichtung, d.h. in Richtung der ersten Seitenkante erstreckt und von einer weiteren Führungsrolle ausgelenkt wird.

Die Auslenkung des zweiten Randbereichs durch die weitere Führungsrolle bewirkt, dass die zweite Seitenkante des Zugmittels beim Auflaufen des zweiten Randbereichs auf die Rolle in deren axialen Richtung versetzt ist. Durch diesen Versatz der zweiten Seitenkante wird das Zugmittel beim Auflaufen auf die Rolle in deren axialen Richtung verschoben, wodurch der Verlauf des Zugmittels über die Rolle korrigiert und ein Schräglauf des Zugmittels verhindert wird.

Durch die Auslenkung des ersten und zweiten Randbereichs des Zugmittels erfolgt eine Korrektur des Zugmittelverlaufs in beide Richtungen axial zur Rolle.

Bei einer Verwendung von wenigstens zwei weitestgehend parallel nebeneinander geführten Zugmitteln kann die zweite Führungsrolle zwischen den Zugmitteln vorgesehen sein, wobei die zweite Führungsrolle die nebeneinander geführten Randbereiche der beiden Zugmittel auslenkt. Die zweite Führungsrolle kann dabei gemäß der Erfindung beispielsweise die Form eines Doppelkonus aufweisen, wobei den nebeneinander verlaufenden Randbereichen jedes Zugmittels jeweils ein konischer Abschnitt zugeordnet ist.

Die erfindungsgemäße Einrichtung wird im Folgenden mit Bezug auf die Zeichnungen anhand von Ausführungsformen näher erläutert. Dabei sind hinsichtlich ihrer Funktion übereinstimmende bzw. vergleichbare Bauteile mit denselben Bezugszeichen gekennzeichnet. In den Zeichnungen zeigen:
- Fig. 1: eine schematische Darstellung eines Zugmittels, das über einer Rolle geführt und von einer Führungsrolle ausgelenkt wird in einer perspektivischen Ansicht;
- Fig. 2: eine seitliche Ansicht des Zugmittels, der Rolle und der Führungsrolle aus Figur 1 mit einer weiteren Rolle;
- Fig. 3: eine Draufsicht auf die Vorrichtung aus Figur 2; sowie
- Fig. 4: eine Draufsicht auf zwei Zugmittel, die weitestgehend parallel über zwei Rollen geführt sind und deren Randbereiche von jeweils einer zugeordneten ersten und zweiten Führungsrolle ausgelenkt werden.

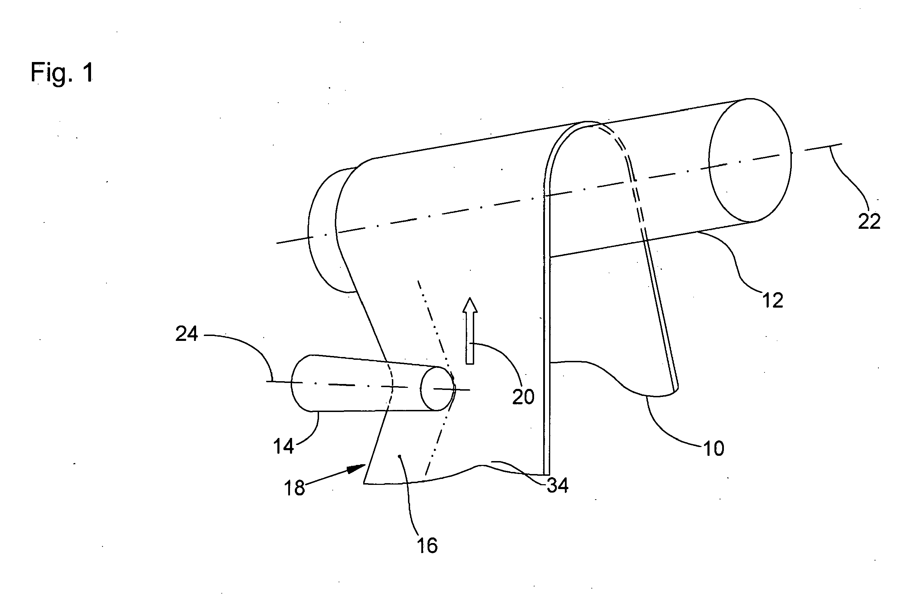

Figur 1, 2 und 3 zeigen ein Zugmittel 10 mit einem sich von der Seitenkante 18 in Breitenrichtung erstreckenden Randbereich 16, eine Rolle 12, eine weitere Rolle 26 sowie eine Führungsrolle 14. Aus Gründen der besseren Darstellbarkeit ist die weitere Rolle 26 in Figur 1 nicht gezeigt.

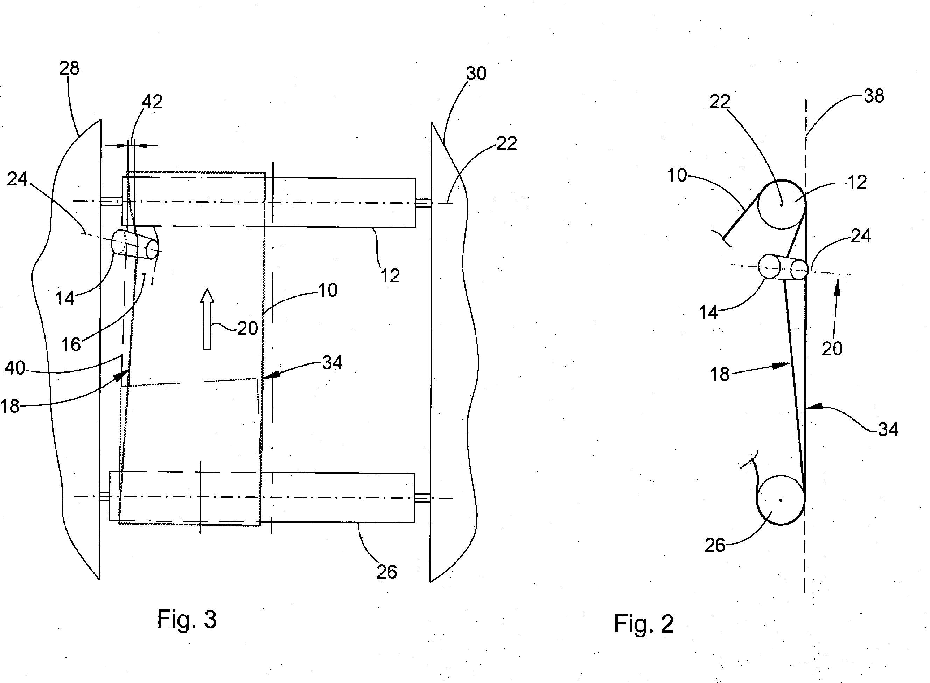

Das Zugmittel 10 wird in Richtung des Pfeils 20 über die weitere Rolle 26 und die Rolle 12 umgelenkt. Die Rollen 12, 26 bestimmen dabei die Bewegungsebene des Zugmittels 10, wobei das Zugmittel 10 durch die Rollen 12, 26 vorgespannt ist. In der Darstellung nach Figur 2 entspricht die Bewegungsebene des Zugmittels 10 der durch die Rollen 12, 26 gebildeten Tangentialebene, die in Figur 2 durch die gestrichelte Linie 38 angedeutet ist.

In Bewegungsrichtung des Zugmittels 10 vor der Rolle 12 ist eine Führungsrolle 14 angeordnet, welche auf die Oberfläche des Zugmittels 10 in deren Randbereich 16 einwirkt und den Randbereich 16 aus der Bewegungsebene 38 des Zugmittels 10 auslenkt, bevor dieses auf die Rolle 12 aufläuft. Das Zugmittel 10 verläuft dabei zwischen der Führungsrolle 14 und der Rolle 12 hindurch.

Die Führungsrolle 14 weist eine konische Mantelform auf, wobei sich der Durchmesser in Breitenrichtung des Zugmittels 10 verkleinert. Die Achse 24 der Führungsrolle 14 erstreckt sich dabei in einem Winkel relativ zur Achse 22 der Rolle 12, so dass sich die Größe der Auslenkung des Randbereichs 16 ausgehend von dessen Seitenkante 18 stetig verringert. Die Breite des ausgelenkten Randbereichs 16 wird durch die Breite der Kontaktfläche der Führungsrolle 14 mit dem Zugmittel 10 bestimmt.

Wie aus der Figur 2 hervorgeht, wird der Randbereich 16 derart aus der Bewegungsebene des Zugmittels 10 ausgelenkt, so dass das Zugmittel 10 ausgehend von der ersten Seitenkante 18 auf die Rolle 12 aufläuft.

Weiterhin zeigen Figur 1 und 3, dass aus der Auslenkung des Randbereichs 16 durch die Führungsrolle 14 zusätzlich ein seitlicher Versatz der Seitenkante 18 in Richtung der Achse 22 der Rolle 12 resultiert. Figur 3 zeigt dabei einen Schräglauf des Zugmittels 10, der durch die Auslenkung des Randbereichs 16 korrigiert wird.

Zur besseren Veranschaulichung der Größe des seitlichen Versatzes 42 der Seitenkante 18 ist in Figur 3 eine gestrichelte Linie 40 gezeigt, die den Verlauf der Seitenkante 18 andeutet, wie er ohne die Auslenkung des Randbereichs 16 durch die Führungsrolle 14 wäre.

Wie der Darstellung in Figur 3 weiterhin entnommen werden kann, sind die Rolle 12 und die weitere Rolle 26 drehbar zwischen zwei Seitenelementen 28, 30 gelagert. Die Führungsrolle 14 ist hingegen nur an einem der Seitenelemente 28 freitragend gelagert.

Die Seitenelemente 28, 30 können beispielsweise Bestandteil eines Rahmens einer nicht dargestellten Rundballenpressen sein.

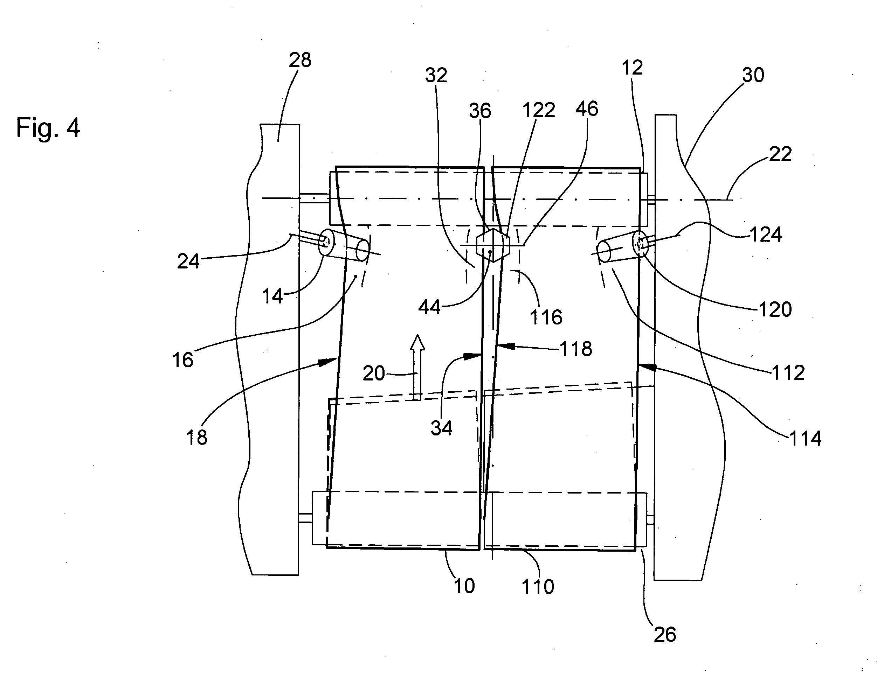

Figur 4 zeigt eine weitere Ausführungsform der in Figur 3 dargestellten Vorrichtung, bei der neben dem Zugmittel 10 noch ein weiteres Zugmittel 110, eine zweite Führungsrolle 36 und eine weitere Führungsrolle 120 vorgesehen ist.

Das Zugmittel 10 verfügt neben dem Randbereich 16 auf der gegenüberliegenden Seite noch einen zweiten Randbereich 32, der sich von der zweiten Seitenkante 34 des Zugmittels 10 in Richtung dessen Breite bzw. in Richtung der Seitenkante 18 erstreckt.

Das weitere Zugmittel 110 und die weitere Führungsrolle 120 ist in Figur 4 spiegelsymmetrisch zum Zugmittel 10 und der Führungsrolle 14 angeordnet, wobei das weitere Zugmittel 110 ebenfalls zwei sich von den Seitenkanten des Zugmittels 110 erstreckende Randbereiche 112, 116 aufweist. Der Randbereich 112 des weiteren Zugmittels 110 ist dabei der weiteren Führungsrolle 120 zugeordnet, wobei dieser durch die weitere Führungsrolle 120 wie der Randbereich 16 des Zugmittels 10 ausgelenkt wird. Um Wiederholungen zu vermeiden, wird daher auf die Beschreibung der Figuren 1 bis 3 verwiesen. Die Funktion der sich entlang der Achse 24 erstreckende Führungsrolle 14, die den Randbereich 16 des Zugmittels 10 auslenkt, entspricht dabei der Funktion der sich entlang der Achse 124 erstreckenden Führungsrolle 120, die den Randbereich 112 des weiteren Zugmittels 110 auslenkt.

Zwischen den beiden Zugmitteln 10, 110 ist die zweite Führungsrolle 36 angeordnet, welche die Form eine Doppelkonus aufweist.

Jedem der Zugmittel 10, 110 ist jeweils ein konusförmiger Abschnitt 44, 122 zugeordnet, wobei der konusförmige Abschnitt 44 den zweiten Randbereich 32 des Zugmittels 10 und der weitere konusförmige Abschnitt 122 den zweiten Randbereich 116 des weiteren Zugmittels 110 auslenkt. Die Achse 46 der zweiten Führungsrolle 36 verläuft dabei im Wesentlichen parallel zur Achse 22 der Rolle 12.

Die benachbarten zweiten Randbereiche 32, 116 der nebeneinander verlaufenden Zugmittel 10, 110 werden durch die zweite Führungsrolle 36 auf die gleiche Weise ausgelenkt wie der Randbereich 16 des Zugmittels 10. Hierzu wird auf die Beschreibung zu den Figuren 1 bis 3 verwiesen.

## Patentansprüche

1. Einrichtung zur Kontrolle des Zugmittelverlaufs von Fördereinrichtungen, insbesondere von Rundballenpressen, umfassend wenigstens eine Rolle (12) und wenigstens ein Zugmittel (10, 110), das über die Rolle (12) geführt wird und zumindest einen Randbereich (16, 112) aufweist, der sich von der Seitenkante (18, 114) des Zugmittels (10, 110) in Richtung dessen Breite erstreckt,
**dadurch gekennzeichnet,**
**dass** wenigstens eine freitragend gelagerte Führungsrolle (14, 120) mit einer im Wesentlichen konischen Mantelform vorgesehen ist, durch die der Randbereich (16, 112) aus der Bewegungsebene (38) des Zugmittels (10, 110) auslenkbar ist.

2. Einrichtung zur Kontrolle des Zugmittelverlaufs von Fördereinrichtungen nach Anspruch 1,
**dadurch gekennzeichnet,**
**dass** die Führungsrolle (14, 120) in Bewegungsrichtung (20) des Zugmittels (10, 110) vor der Rolle (12) angeordnet ist.

3. Einrichtung zur Kontrolle des Zugmittelverlaufs von Fördereinrichtungen nach Anspruch 1 oder Anspruch 2,
**dadurch gekennzeichnet,**
**dass** die Führungsrolle (14, 120) relativ zur Rolle (12) bewegbar ist.

4. Einrichtung zur Kontrolle des Zugmittelverlaufs von Fördereinrichtungen nach einem der vorhergehenden Ansprüche,
**dadurch gekennzeichnet,**
**dass** die Achse (24, 124) der Führungsrolle (14, 120) sich in einem Winkel in einem Bereich von 20° bis 45° relativ zu der Bewegungsebene (38) des Zugmittels (10, 110) erstreckt.

5. Einrichtung zur Kontrolle des Zugmittelverlaufs von Fördereinrichtungen nach einem der vorhergehenden Ansprüche,
**dadurch gekennzeichnet,**
**dass** die Achse (24, 124) der Führungsrolle (14, 120) sich in einem Winkel in einem Bereich von 5° bis 15° relativ zur Achse (22) der Rolle (12) in einer Ebene parallel zur Bewegungsebene (38) des Zugmittels (10, 110) erstreckt.

6. Einrichtung zur Kontrolle des Zugmittelverlaufs von Fördereinrichtungen nach einem der Ansprüche 1 bis 3,
**dadurch gekennzeichnet,**
**dass** die Achse (24, 124) der Führungsrolle (14, 120) sich in einer Richtung parallel zur Achse (22) der Rolle (12) erstreckt.

7. Einrichtung zur Kontrolle des Zugmittelverlaufs von Fördereinrichtungen nach einem vorhergehenden Ansprüche,
**dadurch gekennzeichnet,**
**dass** die Führungsrolle (14, 120) sich über wenigstens ein Drittel der Breite des Zugmittels (10, 110) hinweg erstreckt.

8. Einrichtung zur Kontrolle des Zugmittelverlaufs von Fördereinrichtungen nach einem der vorhergehenden Ansprüche,
**dadurch gekennzeichnet,**
**dass** die Führungsrolle (14, 120) und die Rolle (12) in Bezug zum Zugmittel (10, 110) auf der gleichen Seite angeordnet sind.

9. Einrichtung zur Kontrolle des Zugmittelverlaufs von Fördereinrichtungen nach einem der Ansprüche 1 bis 7,
**dadurch gekennzeichnet,**
**dass** die Führungsrolle (14, 120) und die Rolle (12) auf gegenüberliegenden Seiten des Zugmittels (10, 110) angeordnet sind.

10. Einrichtung zur Kontrolle des Zugmittelverlaufs von Fördereinrichtungen nach einem der vorhergehenden Ansprüche,
**dadurch gekennzeichnet,**
**dass** das Zugmittel (10, 110) einen zweiten Randbereich (32, 116) aufweist und eine zweite Führungsrolle (36) vorgesehen ist, durch die der zweite Randbereich (32, 116) aus der Bewegungsebene (38) des Zugmittels (10,110) auslenkbar ist.

## Claims

1. Device for controlling the course of the traction means of conveyor devices, in particular of round balers, having at least one roller (12) and at least one traction means (10, 110) which is guided over the roller (12) and has at least one edge region (16, 112) which extends from the side edge (18, 114) of the traction means (10, 110) in the direction of the width thereof,
**characterized in that**
at least one guide roller (14, 120) which is mounted in a cantilevered fashion and has an essentially conical casing shape is provided through which the edge region (16, 112) can be deflected from the movement plane (38) of the traction means (10, 110).

2. Device for controlling the course of the traction means of conveyor devices according to Claim 1,
**characterized in that**
the guide roller (14, 120) is arranged in front of the roller (12) in the movement direction (20) of the traction means (10, 110).

3. Device for controlling the course of the traction means of conveyor devices according to Claim 1 or Claim 2,
**characterized in that**
the guide roller (14, 120) can be moved relative to the roller (12).

4. Device for controlling the course of the traction means of conveyor devices according to one of the preceding claims,
**characterized in that**
the axis (24, 124) of the guide roller (14, 120) extends at an angle in a range from 20° to 45° relative to the movement plane (38) of the traction means (10, 110).

5. Device for controlling the course of the traction means of conveyor devices according to one of the preceding claims,
**characterized in that**
the axis (24, 124) of the guide roller (14, 120) extends at an angle in a range from 5° to 15° relative to the axis (22) of the roller (12) in a plane parallel to the movement plane (38) of the traction means (10, 110).

6. Device for controlling the course of the traction means of conveyor devices according to one of Claims 1 to 3,
**characterized in that**
the axis (24, 124) of the guide roller (14, 120) extends in a direction parallel to the axis (22) of the roller (12).

7. Device for controlling the course of the traction means of conveyor devices according to one of the preceding claims,
**characterized in that**
the guide roller (14, 120) extends over at least a third of the width of the traction means (10, 110).

8. Device for controlling the course of the traction means of conveyor devices according to one of the preceding claims,
**characterized in that**
the guide roller (14, 120) and the roller (12) are arranged on the same side with respect to the traction means (10, 110).

9. Device for controlling the course of the traction means of conveyor devices according to one of Claims 1 to 7,
**characterized in that**
the guide roller (14, 120) and the roller (12) are arranged on opposite sides of the traction means (10, 110).

10. Device for controlling the course of the traction means of conveyor devices according to one of the preceding claims,
**characterized in that**
the traction means (10, 110) has a second edge region (32, 116), and a second guide roller (36) is provided by which the second edge region (32, 116) can be deflected from the movement plane (38) of the traction means (10, 110).

## Revendications

1. Dispositif de contrôle de l'évolution du moyen de traction de dispositifs de convoyage, en particulier de presses à balles rondes, comprenant au moins un rouleau (12) et au moins un moyen de traction (10, 110) qui est guidé au-dessus du rouleau (12) et présente au moins une partie périphérique (16, 112) qui s'étend depuis l'arête latérale (18, 114) du moyen de traction (10, 110) en direction de sa largeur,
**caractérisé en ce**
**qu'**il est prévu au moins un rouleau de guidage à palier en porte à faux (14, 120) ayant une forme d'enveloppe sensiblement conique grâce à laquelle la partie périphérique (16, 112) peut être déviée du plan de mouvement (38) du moyen de traction (10, 110).

2. Dispositif de contrôle de l'évolution du moyen de traction de dispositifs de convoyage selon la revendication 1,
**caractérisé en ce que**
le rouleau de guidage (14, 120) est disposé dans le sens de mouvement (20) du moyen de traction (10, 110) en amont du rouleau (12).

3. Dispositif de contrôle de l'évolution du moyen de traction de dispositifs de convoyage selon la revendication 1 ou la revendication 2,
**caractérisé en ce que**
le rouleau de guidage (14, 120) est mobile par rapport au rouleau (12).

4. Dispositif de contrôle de l'évolution du moyen de traction de dispositifs de convoyage selon l'une quelconque des revendications précédentes,
**caractérisé en ce que**
l'axe (24, 124) du rouleau de guidage (14, 120) s'étend suivant un angle de l'ordre de 20° à 45° par rapport au plan de mouvement (38) du moyen de traction (10, 110).

5. Dispositif de contrôle de l'évolution du moyen de traction de dispositifs de convoyage selon l'une quelconque des revendications précédentes,
**caractérisé en ce que**
l'axe (24, 124) du rouleau de guidage (14, 120) s'étend suivant un angle de l'ordre de 5° à 15° par rapport à l'axe (22) du rouleau (12) dans un sens parallèle au plan de mouvement (38) du moyen de traction (10, 110).

6. Dispositif de contrôle de l'évolution du moyen de traction de dispositifs de convoyage selon l'une quelconque des revendications 1 à 3,
**caractérisé en ce que**
l'axe (24, 124) du rouleau de guidage (14, 120) s'étend dans un sens parallèle à l'axe (22) du rouleau (12).

7. Dispositif de contrôle de l'évolution du moyen de traction de dispositifs de convoyage selon l'une quelconque des revendications précédentes,
**caractérisé en ce que**
le rouleau de guidage (14, 120) s'étend sur au moins un tiers de la largeur du moyen de traction (10, 110).

8. Dispositif de contrôle de l'évolution du moyen de traction de dispositifs de convoyage selon l'une quelconque des revendications précédentes,
**caractérisé en ce que**
le rouleau de guidage (14, 120) et le rouleau (12) sont disposés du même côté que le moyen de traction (10, 110).

9. Dispositif de contrôle de l'évolution du moyen de traction de dispositifs de convoyage selon l'une quelconque des revendications 1 à 7,
**caractérisé en ce que**
le rouleau de guidage (14, 120) et le rouleau (12) sont disposés sur des faces opposées du moyen de traction (10, 110).

10. Dispositif de contrôle de l'évolution du moyen de traction de dispositifs de convoyage selon l'une quelconque des revendications précédentes,
**caractérisé en ce que**
le moyen de traction (10, 110) présente une seconde zone périphérique (32, 116) et qu'il est prévu un second rouleau de guidage (36) grâce auquel la seconde zone périphérique (32, 116) peut être déviée du plan de mouvement (38) du moyen de traction (10, 110).
